# EUROPEAN PATENT SPECIFICATION

(11) **EP 3 625 404 B1**
(45) Date of publication and mention of the grant of the patent: **07.04.2021**
(21) Application number: 18731180.8
(22) Date of filing: 18.05.2018
(51) Int. Cl.: E04C 2/54, B28B 23/00

(54) **COMPOSITE PANEL WITH LIGHT TRANSPARENCY PROPERTIES AND METHOD FOR MAKING SAID PANEL**
VERBUNDPLATTE MIT LICHTDURCHLÄSSIGEN EIGENSCHAFTEN UND VERFAHREN ZU IHRER HERSTELLUNG
PANNEAU COMPOSITE À PROPRIÉTÉS DE TRANSPARENCE À LA LUMIÈRE ET PROCÉDÉ DE FABRICATION DUDIT PANNEAU

(30) Priority: 19.05.2017 IT 201700054638
(43) Date of publication of application: 25.03.2020
(73) Proprietor: ITALCEMENTI S.p.A., 24126 Bergamo (IT); Gesteco S.p.A., 33040 Povoletto (IT)
(72) Inventor: SCALCHI, Enrico, 20122 Milano (IT); MUNINI, Andrea, 33040 Attimis (IT); LUCI, Alexandro, 33040 Moimacco (IT)
(74) Representative: Cinquantini, Bruno
(86) International application number: PCT/IB2018/053521
(87) International publication number: WO 2018/211470

(56) References cited:
- EP-A1- 2 784 237
- WO-A1-2014/184242
- WO-A2-2009/007765
- US-A- 3 091 899

## Description

### FIELD OF THE INVENTION

The present invention relates to a new composite panel comprising a pourable and settable base material, preferably cementitious mortar, and a plurality of elements for transmitting light radiation between the two opposite surfaces of the panel. The present invention also relates to a method for making said panel. The present invention further relates to a semi-finished product for making said composite panel and to a method for making said semi-finished product.

### BACKGROUND ART

The use of cementitious articles with light translucency properties is known in the field. Among such manufactured items are those in the form of cementitious mortar composite panels comprising elements made of translucent transparent material. These elements are named *"through elements"* because they extend through the whole thickness of the panel so as to transmit light between its two opposite surfaces. Typically, these through elements are made of polymethylmethacrylate (PMMA) or alternatively of glass.

The patent application WO2015132287, for example, describes a method for making a panel with through elements made of PPMA. This method provides for the use of a monolithic structure, by a plastic injection process, which defines a plurality of elements made of PMMA emerging from a lower base. The method includes placing this structure in a formwork and pouring cementitious mortar so that it is distributed between the elements in the PMMA. After the cementitious mortar sets, the cementitious manufactured item is removed from the formwork and finished by eliminating the lower base of the monolithic structure and taking the surfaces to the desired size.

The patent application WO 2014184242, instead, describes a method for making a composite panel with through elements made of glass. Such a method includes positioning glass sheets inside a formwork on parallel planes. Each sheet comprises a peripheral frame which supports the mutually separated longitudinal elements and have a shape corresponding to that provided for the through elements of the panel to be made. When the positioning of these sheets is completed, the method provides pouring the cementitious mortar inside the formwork so that it is distributed around the longitudinal elements defined by the sheets. At the end of the setting process of the cementitious mortar, the manufactured item thus obtained is extracted from the formwork and roughed to eliminate the portions containing the peripheral frame of the sheets. In this manner, only the longitudinal elements remain incorporated in the cementitious mortar. The semi-finished product thus roughed is further sectioned, according to planes orthogonal to the axis of the longitudinal elements made of glass, so as to obtain prismatic portions of thickness substantially corresponding to that of the composite panel to be made. These portions are then finished in order to obtain the desired panel.

Patent application EP 2179105 describes another method for making a cementitious mortar composite panel with through elements. Such a method includes making one or more supporting structures made of plastic material which support the through elements in separated and distinct positions. Each of these structures has a substantially two-dimensional development and defines apertures for the passage of the mortar in the subsequent step of casting. The assembly formed by the supporting structure and the through elements is placed inside the formwork and locked on its bottom with fixing means. The cementitious mortar is then poured. At the end of the step of setting, the cementitious panel thus formed is extracted and possibly finished.

It has been found that the methods described above are absolutely not suitable for making composite panels with light-transmitting elements made of glass. This type of panels is however greatly on demand because glass guarantees a better light transmission than that which can be obtained using through elements made of PMMA.

The method described in WO 2014184242, for example, has several critical aspects, one of which is the complex structure to be assigned to the glass plates to be inserted in the formwork. Another critical aspect is in the high number of operations required to transform the product obtained at the end of the setting process, into panels of the desired shape and size. Indeed, such operations require the use of particularly complex machinery for handling and cutting and designed specifically for this process. The costs of such machines affect heavily the final production costs of the panels.

The method described in EP 2179105 is also totally inappropriate for making composite panels with through elements made of glass. In particular, the use of a two-dimensional supporting structure appears disadvantageous especially during the step of casting the cementitious mortar. The latter applies multiple thrusts on glass elements which tend to misalign the through elements with respect to the provided theoretical orientation. In many cases, these stresses cause the breakage of the glass elements and the consequent rejection of the panel. In general, it is seen that the method described in EP 2179105 causes a considerable number of rejects and poor-quality panels.

In addition to the drawbacks related to the manufacturing methods, the composite panels with through elements made of glass have other drawbacks due to their inner structure. In this regard, it is worth noting that such panels, except for the glass part of the through elements, are entirely made of cementitious mortar. This aspect becomes critical as the size of the panels increases, since it results in a proportional increase in weight and, ultimately, into a greater difficulty in managing and transporting the panels themselves. This problem is also encountered in the panels obtained by means of the method described in EP 2179105. Indeed, the section occupied by the supporting structure, being two-dimensional, is substantially irrelevant with respect to that made of cementitious mortar.

At the same time, another critical aspect is related to the need to arrange reinforcing elements (typically meshes) inside the panel to increase the mechanical strength of the panel and prevent it from breaking when it is installed or stressed by external loads. Such reinforcing elements are typically placed in the formwork before the step of pouring the cementitious mortar. During the step of setting, the adhesion of the cementitious mortar with the reinforcing elements is another particularly critical aspect which results in frequent cracks in the panel.

WO2009/007765 which discloses a composite panel according to the preamble of claim 1, leaves room for further reducing its weight.

In light of the considerations outlined above, the need thus arises for a composite panel with through elements made of glass having an improved structure as compared to that of the currently available panels. At the same time, the need also emerges for a new method which allows to make said panels effectively and reliably.

Therefore, it is the main task of the present invention to provide a new composite panel made of cementitious mortar, with through elements made of glass, which allows to overcome the drawbacks of the prior art. In the scope of this task, it is a first object to provide a panel, the structure of which facilitates the handling and transport of the panel itself. It is another object of the present invention to provide a panel, the structure of which ensures high mechanical properties. It is another object to provide a panel which is both reliable and easy to be manufactured at competitive costs.

It is another object of the invention to provide a method for making a composite panel made of cementitious mortar, with through elements made of glass, which allows to overcome the drawbacks of the prior art. Within the scope of this second task, it is an object to provide a method which allows to provide high productivity and a high-quality level at low cost.

### SUMMARY

The present invention thus relates to a composite panel in accordance with claim 1.

According to the invention, for at least one of the through elements, the extension of the central part, evaluated along the reference direction is greater than the extension of each of the end parts of said through elements incorporated in the corresponding main portions made of said base material.

Advantageously, the structure occupies a volume portion of the panel greater than the volume portion occupied by the cementitious mortar. In this manner, the dimensions being equal, the panel is advantageously lighter than the traditional solutions in which the panel is constituted nearly entirely of cementitious mortar. It follows that the panel itself is easier to transport and in general easier to maneuver.

The present invention also relates to a semi-finished product for making a panel as indicated above and to a method of making said panel based on the use of said semi-finished product.

### LIST OF DRAWINGS

Further features and advantages will become apparent from the following detailed description of the method of making the cementitious manufactured item according to the present invention shown by way of non-limiting example by means of the accompanying drawings, in which:
- Figure 1 and Figure 2 are a front view and a perspective view of a composite panel based on cementitious mortar according to the invention, respectively;
- Figures 3 and 4 are section views taken along section plane III-III and section plane IV-IVI in figure 1, respectively;
- Figure 5 is a perspective section view, taken along section plane III-III in Figure;
- Figure 6 is a perspective view of a semi-finished product for making a panel according to the present invention;
- Figures 7 and 8 are a perspective views and a front view, taken along section plane VII-VII in Figure 6, respectively;
- Figure 9 is a perspective view of a mold for carry out a semi-finished product for making a panel according to the present invention;
- Figure 10 is a further perspective view of the mold of Figure 9;
- Figures 11 is a view, taken along plane XI-XI of Figure 9;
- Figures 12 and 13 are views relating to a step of pouring in vertical formwork and to a step of pouring in horizontal formwork of a method for making a panel according to the present invention, respectively;
- Figures 14 and 15 are further views of the formwork of figures 12 and 13 respectively.

The same reference numbers and letters in the figures refer to the same elements or components.

### DETAILED DESCRIPTION

The present invention thus relates to a composite panel 1 based on cementitious mortar or other pourable and settable material, comprising a plurality of through elements 10 to transmit light from a first base surface 1' to a second base surface 1", which is opposite to said first surface 1'. In the following description, reference will be made to a composite panel 1 based on cementitious mortar, but the considerations and the technical solutions described below also apply to composite panels comprising another base material, e.g. plastic, in all cases pourable and settable.

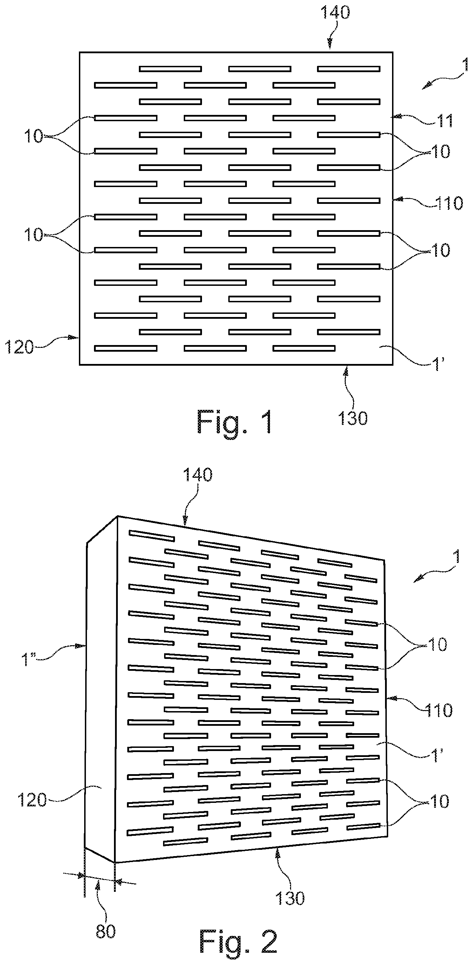

Figures 1 and 2 are views of a panel 1, according to the invention, in which the base surfaces 1',1", which develop on parallel planes, are indicated. The panel 1 also defines peripheral surfaces 110,120,130,140 which extend on planes orthogonal to those on which the two base surfaces 1',1" extend. In particular, the panel 1 comprises a first peripheral surface 110 and a mutually opposite second peripheral surface 120, which extend on planes which are parallel and orthogonal to the plans on which the two base surfaces 1', 1" extend. The panel 1 further comprises a third peripheral surface 130 and a mutually opposite fourth peripheral surface 140, which extend on planes parallel to each other and orthogonal to planes on which the other peripheral surfaces 110,120,130,140 defined above extend.

The area of the surfaces 1',1" is greater than that of other peripheral surfaces 110,120,130,140 indicated above. For the purposes of the present invention, the distance between the two base surfaces 1,1" defines the thickness of the panel 1 (indicated by reference numeral 80 in figure 2). Such distance is evaluated according to a direction substantially orthogonal to the parallel planes on which the two base surfaces 1',1" extend.

For the present invention, the light transmitting elements 10 are made of glass and extend prevalently along a reference direction 101 which is substantially orthogonal to the planes on which the surfaces 1',1" extend. In particular, the extension of the elements 10 corresponds to the thickness 80 of the panel 1. For this reason, in the following description, they will also be indicated by the expression *"through elements 10".*

According to a possible embodiment, the through elements 10 have a substantially rectangular cross section evaluated according to a section plane substantially orthogonal to the reference direction 101. The extension and dimensions of the sides of the cross section, in terms of width and length, are preferably the same for all through elements 10. In alternative embodiments, the shape of the cross section of the through elements 10 may be other than rectangular.

The panel 1 according to the invention comprises an inner structure 5 made of sintered heat-expanded plastic material about the through elements 10. More precisely, the structure 5 is defined by means of a sintering process of heat-expanding material performed in a mold, in which through elements 10 made of glass were previous placed in predetermined positions. As described in greater detail below, at the end of the sintering, through elements 10 are stably anchored and perfectly adherent to the structure 5 made of heat-expanding material.

In the panel 1 according to the invention, a central part 12 of each through element 10 is incorporated in the structure 5. For each of the through elements 10, this central part 12 is defined between a first end portion 13 and a mutually opposite second end portion 14, not incorporated in the inner structure 5. Preferably, the extension of the first end part 13, measured along the reference direction 101, is equal to the extension of the second end part 14, measured along the same direction.

According to the present invention, the first end part 13 and the second end part 14 of the through elements 10 are incorporated in the corresponding main portions 23, 24 of the panel 1 made of cementitious mortar. Such main portions 23, 24 are mutually connected by a plurality of through portions 25, also made of cementitious mortar, which extend through the structure 5. As explained in greater detail below, the main portions 23, 24 and through portions 25 are formed as a result of pouring cementitious mortar in a mold in which semi-finished product 8 is arranged and defined as the assembly constituted by the inner structure 5 and by the through elements 10 connected thereto.

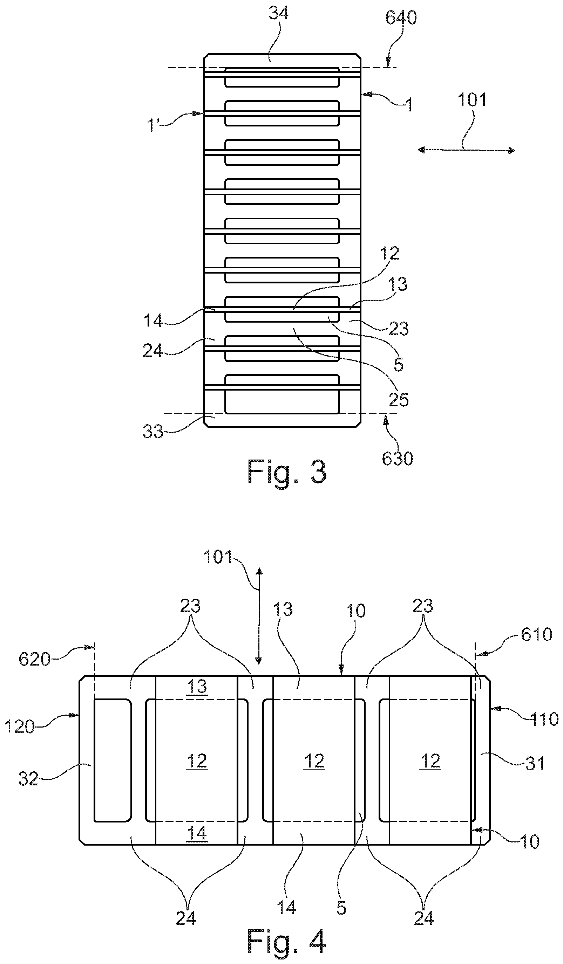

Furthermore, according to the present invention, for at least one of the through elements 10, preferably for all of them, the extension of the central part 12 incorporated in the structure 5 is greater than the extension of the first part 13 and/or of the second end part 14 incorporated in the corresponding main portions 23, 24 made of cementitious mortar. The extension of the parts 12, 13, 14 of the through elements 10 is evaluated along the reference direction 101 defined above. This dimensional relationship between the parts of the through elements 10 is shown, for example, in the section views in Figure 3 and 4.

According to a preferred embodiment, the extension of the first end part 13 and/or of the second end part 14, of at least one of said through elements 10 (preferably of all elements), is between 5% and 25% of the extension of the element itself, extension evaluated again along the reference direction 101 defined above. Even more preferably, the extension of the first end part 13 and/or of the second end part 14, of at least one of said through elements 10 (preferably of all elements), is between 10% and 20% of the extension of the element itself.

In general, according to the invention, the structure 5 occupies a portion of the volume of the panel 1 is greater than to the volume portion occupied by the cementitious mortar. In this manner, the structure 5 made of a heat-expanding material allows an advantageous reduction of the panel 1 and easier transportation as a consequence.

At the same time, the two main portions 23, 24 and the through portions 25 made of cementitious mortar form a substantially self-supporting structure inside which the structure 5 made of a heat-expanded material remains forced. In this regard, it has been seen that, being equal the same and the shape and the dimensions of through elements and less cementitious mortar being used, a panel according to the invention has sufficient mechanical properties to be used in the same conditions of a traditional panel.

Figures from 6 to 8 are views relating to a possible embodiment of a semi-finished product 8, meaning the whole defined by the inner structure 5 and by the through elements 10 used in it, which can be used for making a panel 1 according to the present invention. Indeed, such semi-finished product 8 is defined by means of a sintering process of heat-expanding plastic material, preferably EPS, inside a mold according to a principle which is described in greater detail below.

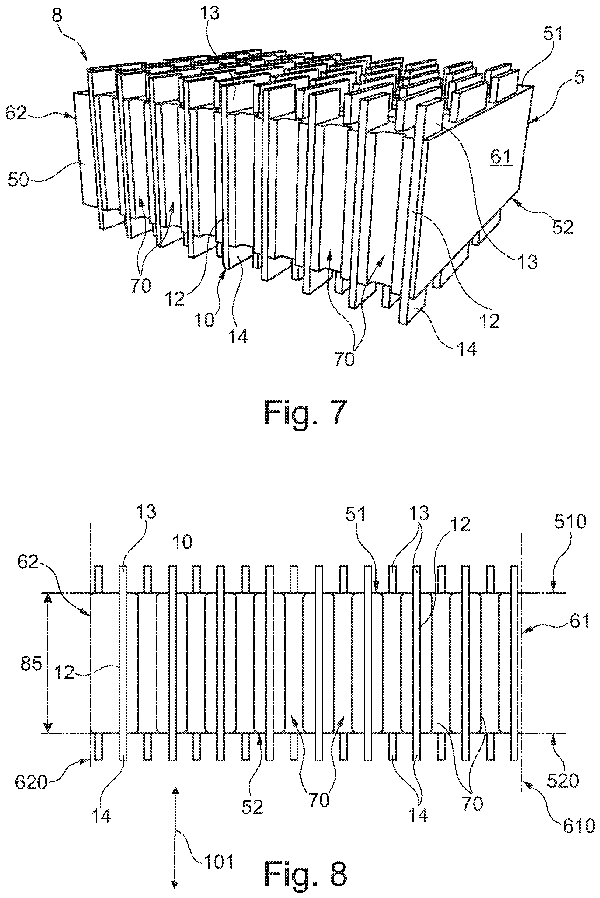

In general, the structure 5 of the semi-finished product 8 comprises a body 50 which defines a first main surface 51 and a second main surface 52 which are mutually opposite. The first part 13 of the through elements 10 emerges from the first main surface 51, while the second part 14 of the same through elements 10 (see for example Figure 8) emerges from the second main surface 52. Preferably, the body 50 has a substantially prismatic conformation, so that the two main surfaces 51, 52 extend prevalently on parallel planes 510,520, the distance of which defines the thickness 85 of the body 50, i.e. of the structure 5. According to the purposes of the present invention, such thickness 85 coincides with the extension of the central part 12 of the through elements 10.

The body 50 of the structure 5 further defines a first side surface 61 and a second side surface 62 which extend on respective planes 610,620 which are parallel to each other and orthogonal to the extension planes of 510,520 of the two main surfaces 51, 52. In order to complete the prismatic structure, the body 50 further comprises a third side surface 63 and a mutually opposite fourth side surface 64, which extend on planes orthogonal to those on which the other surfaces 51,52,61,62 of body 50 defined above extend. The area of the two main surfaces 51, 52 of the body 50 is greater than the area of the side surfaces 61,62,63,64 defined above.

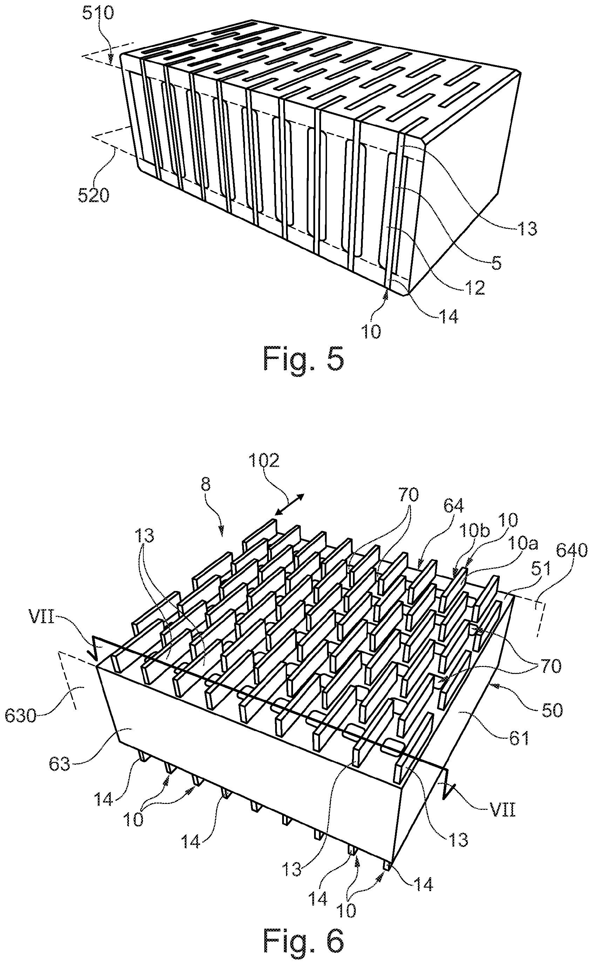

Again with reference to Figures from 3 to 5, the first main portion 23 made of cementitious mortar of the panel 1 is between the first base surface 1' of the panel itself and the first main surface 51 of the body 50 of the structure 5. Similarly, the second main portion 24 made of cementitious mortar is between the second base surface 1" of the panel 1 and the second main surface 52 of the body 50. Figure 5 shows (with dashed line) the planes 510,520 on which the two side surfaces 51,52 of the central body 5 extend.

According to a preferred embodiment, the panel 1 also comprises a first side portion 31 and a second side portion 32, opposite with respect to the central body 5 and both made of cementitious mortar. In particular, the first side portion 31 extends between the first peripheral surface 110 of the panel 1 and the first side surface 61 of the inner structure 5, while the second side portion 32 extends between the second peripheral surface 120 of the panel 1 and the fourth side surface 62 of the structure 5. The view in Figure 4 shows (with dashed line) the planes 610,620 on which the two side surfaces 61,62 (first and second) of the structure 5 extend.

Even more preferably, the panel 1 also comprises a third side portion 33 and a fourth side portion 34, opposite to the central body 5 and made of cementitious mortar. In particular, the third side portion 33 extends between the third peripheral surface 130 of the panel 1 and the third side surface 63 of the inner structure 5, while the fourth side portion 34 extends between the fourth peripheral surface 14 of the panel 1 and the fifth side surface 64 of the structure 5. As a whole, the main portions 23,24 and the side portions 31,32,33,34 define a box-like structure which surrounds and incorporates the inner structure 5 isolating it completely. Advantageously, all portions 23,24,25,31,32,33,34 made of cementitious mortar of the panel 1 are advantageously defined within a same step of pouring.

According to a preferred but not exclusive embodiment shown in the figures, the through elements 10 of the panel 1 are arranged along rows staggered along a staggered direction 102, perpendicular to said reference direction 101. In the example shown, this staggered direction is parallel to the planes 610,620, on which the first side surface 61 and second side surface 62 of the structure 5 extend. In particular, it can be noted that the elements of each row are arranged in longitudinally staggered positions with respect to the positions of the elements of the adjacent rows. In particular, each element 10 of a first row faces, with a first side 10a thereof, a corresponding separation space defined between the elements of a second row of adjacent elements. At the same time, the element itself faces a corresponding separation space defined between the elements of a third adjacent row with a second side 10b thereof. The elements of the second row are specular to the elements of the third row with respect to the first considered row of elements.

The body 50 also defines passages 70 which extend for the entire thickness 85 of the body 50 itself between the first main surface 51 and the second main surface 52 (in Figure 8). As described in greater detail below, during the step of pouring which leads to the formation of the panel 1 according to the invention, the passages 70 advantageously allow the cementitious mortar to be distributed in optimal manner inside the formwork 500,500'. At the same time, at the end of the step of pouring and of the subsequent step of setting, the cementitious mortar which sets inside the passages 70 defines the through portions 25 which connect the two main portions 23,24 of the panel 1.

According to a first possible embodiment, the passages 70 have a substantially constant cross-section along their whole extension between the first main surface 51 and the second main surface 52 of the central body 5. Such a cross-section is assessed according to a reference plane orthogonal to the reference direction 101 defined above. In the embodiment shown in the figures, the cross section of the passages 70 has, for example, a substantially square shape with rounded corners (see view in perspective of the Figure). The conformation of the through portions 25 of the panel 1 geometrically corresponds to that of the passages 70 in which they are defined.

According to an alternative embodiment, the passages 70 have a cross section the area of which varies from a maximum value at one of said main surfaces 51,52 to a minimum value at the other of said side surfaces 51,52. In other words, the passages 70 have a tapered configuration in the direction of one of the two main surfaces 51,52. It follows that the through portions 25 also have a tapered configuration.

According to another aspect, the passages 70 are preferably defined so as to be uniformly distributed inside the body 50 of the structure 5. In the embodiment shown in the figures, the through elements 10 are arranged along *"staggered rows"* as shown above, each passage 70 is defined in the separation space between two through elements belonging to the same row and/or between two elements facing each other and belonging to files of elements which are not adjacent.

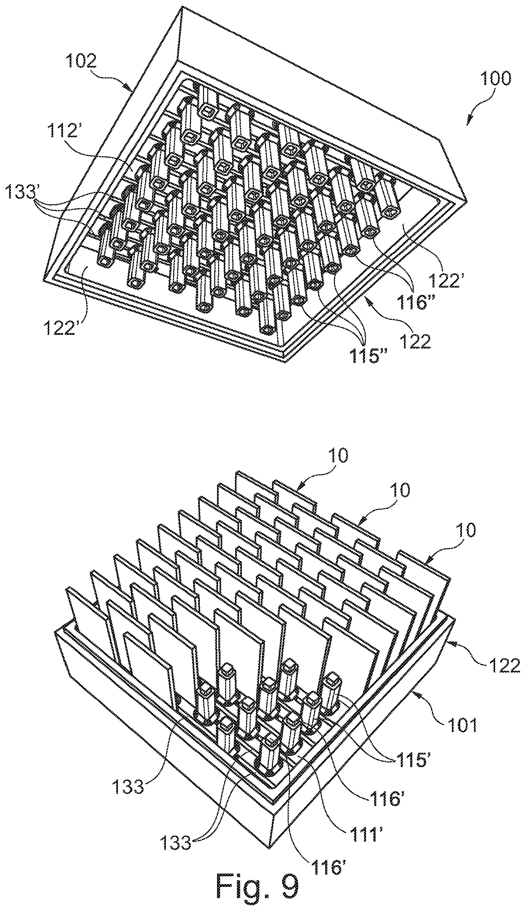

Figures 9, 10 and 11 refer to a method for making a semi-finished product 8 for making a panel according to the present invention. As mentioned above, such method provides sintering a heat-expanding material inside a mold 100, in which the passing elements 10 made of glass were previously arranged. Specifically, the mold 100 comprises a first half-mold 101 and a second half-mold 102. One of the two half-molds (e.g. the second half-mold 102) is provided with feeding openings 103 through which the heat-expandable material in the form of pre-foamed beads is loaded inside the mold 100. The geometric conformation of the first mold 101 and of the second mold 102 is such to define, as a consequence of their union, a hollow inner volume geometrically conforming with the body 50 of the structure 8 of the semi-finished product 8 which is intended to obtain.

The manufacturing method of the semi-finished product 8 provides placing light-transmitting elements 10 in predetermined positions inside the mold 100 so that a central portion 12 of the elements themselves is inside the mold 100, while a first end portion 13 and a second end portion 14 are outside the mold. The expressions *"inside the mold 100"* and *"outside the mold 100"* indicate a condition for which a corresponding portion 12,13,14 of the element 10 made of glass is either inside or outside the volume configured in the mold following the union of the two half-molds 101,102, volume intended to be filled by the plastic material.

The manufacturing method of the semi-finished product 8 further includes placing a plurality of nail pins 115',115" in an adjacent position, and thus not occupied by the elements 10 made of glass, inside the mold 100. The conformation of such nail pins 115',115" geometrically corresponds to that of the passages 70 provided for the structure 5 of the semi-finished product 8' to be made.

The manufacturing method of the semi-finished product 8 provides loading/filling the inner volume configured by the mold 100 with heat-expanded plastic material in the form of pearls. At the end of such a loading/filling, the mold 100 is brought to a predetermined temperature to activate the sintering process of the pre-expanded material. The mold 100 is kept at predetermined temperatures and for predetermined times according to a thermal cycle depending on the type of heat-expandable material used and the sizes of the structure 5.

According to a preferred embodiment of the invention shown in the figures, each half-mold 101, 102 comprises a bottom portion 111,112 which defines a bottom surface 111',112' inside the semi-mold 101,102 itself. For each half-mold 101,102, the bottom surface 111',112' geometrically conforms with a corresponding main surface 51,52 of the central body 50 of the structure 5 of the semi-finished product 8 to be obtained. Each half-mold 101,102 also comprises a peripheral portion 121,122 which extends from said bottom portion 111,112 and which comprises the inner surfaces 121',122', each geometrically conforming to a portion of a side surface 61,62,63,64 of the body 50 of the structure 5 to be made.

Preferably, each half-mold 101,102 further defines a plurality of seats 133,133' which extend inside the bottom portion 111,112 starting from the respective bottom surface 111',112'. Each of said seats 133,133' is configured to accommodate a corresponding end portion 13,14 of transmitting elements 10 made of glass. Therefore, the shape of each of the housing seats 133 is geometrically corresponding to that of the corresponding end part 13,14 of the elements 10 to be housed.

More precisely, in this preferred embodiment, the method provides inserting a first end portion 13 of each through element 10 in a corresponding seat 133 formed in the bottom portion 11 of the first half-mold 101 (see Figure 9). In this manner, all the elements 10 are temporarily associated with the first semi-mold 101. Successively, the two half-molds 101,102 are coupled so that for each through element 10, the second end portion 14 is inserted (and remains housed once the coupling is completed) in the corresponding housing seat 133' formed in the bottom portion 112 of the second mold-half 102. In this manner, for each through element 10, only the central part 12 remains in the hollow inner volume defined upon the completion of the union of the two half-molds 101,102.

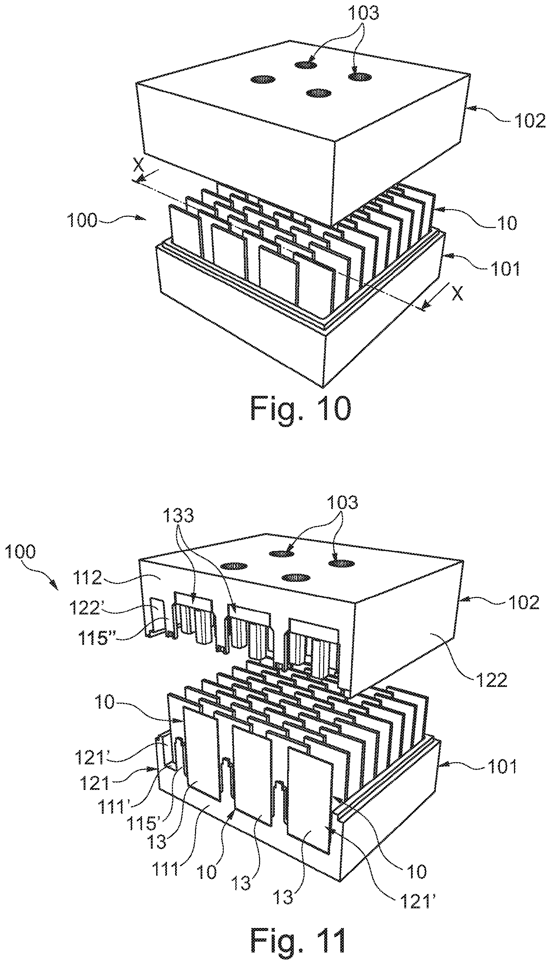

Figures 10 and 11 show the embodiment of the method described above in which all the elements 10 are initially associated with the first semi-mold 101. The section view of Figure 11 shows that the first end part 13 of the through elements 10 housed in a corresponding seat 133 defined in the bottom portion 111 of first mold 101, while the remaining part of the central portion 12 and the second part 14 emerge from the bottom surface 111' of the first mold 101 itself. Figure 11 also shows the seats 133 formed in the bottom portion 112 of the second mold 102 into each of which the second end portion 14 of a corresponding through element 10 will be inserted and will remain housed.

Again with reference to Figure 9, each half-mold 101,102 preferably comprises a plurality of nail pins 115',115" which extend from the bottom surface 111 of a corresponding half-mold 101,102 inside the volume defined by the peripheral portion 121,122 of the semi-mold itself. In particular, such pins 115',115" extend from portions of the bottom surface 111',112' between the housing seats 133,133' defined above.

Each of the nail pins 115',115" of one of the half-molds 101,102 comprises an end 116',116" configured to couple, following the union of the two half-molds 101,102, with one end geometrically conforming with a corresponding nail pin 115',115" of the other half-mold 101,102. In this manner, after joining the two half-molds 101,102 is defined by a plurality of longitudinal pins (each generated by the union of two nail pins 115',115") which extend between the two bottom surfaces 111',112' of the two half-molds 101,102. In the example shown in Figure 11, each of the nail pins 115' defined within the first half-mold 101 has one male end 116' which is inserted in a female end 116" of a corresponding nail pin 115" defined within the second mold-half 102. Further, the length of the nail pins 115',115" of the two half-molds 101,102 is substantially half the total length of the longitudinal pin generated as a result of the union of the two half-molds 101, 102.

The embodiment shown in Figure 9 and described above is only one possible, and thus not exclusive embodiment, of the two half-molds 101,102 and in particular of the nail pins 115',115". For example, the length of the nail pins of one of the two half-molds may be markedly different from the one of the pins of the other half-mold. In a further variant, only one of the two molds may include nail pins which protrude from the corresponding bottom surface for a length either equal to or greater than the distance between the two bottom surfaces of the two mold half-molds 101,102, this distance being considered in a closed condition of the mold 100. In this case, the ends of the nail pins could be shaped to be inserted in the corresponding housings configured in the bottom portion of the semi-mold which does not include nail pins.

The present invention also relates to a method for carrying out a panel 1 according to the invention by using a semi-finished product 8 made according to the principles described above. In particular, the method of making of the panel 1 provides preparing a formwork 500,500' inside which said semi-finished product 8 is housed. The structure of the formwork 500,500' is defined by the geometrical features of the panel 1 which is intended to be obtained. For the purposes of the present invention, the word *"formwork"* generically indicates a prism-shaped containing element comprising a bottom wall and side containing walls which protrude from the bottom wall so as to define an opening in a position opposite to the bottom wall. Firstly, the semi-finished product 8 may be inserted through this opening and then the cementitious mortar may be poured.

The method of making the panel 1 provides pouring the cementitious mortar inside the formwork 500,500' so that it distributed in the spaces defined between the walls of the formwork 500 and the semi-finished product 8 arranged inside it. In this sense, the passages 70 are defined through the structure 5 of the semi-finished product 8 allowing a uniform distribution of the mortar between the two opposite parts of the mold with respect to the structure 5 of the semi-finished product. This technical effect can be achieved by pouring in *"vertical formwork"* or pouring in *"horizontal formwork".*

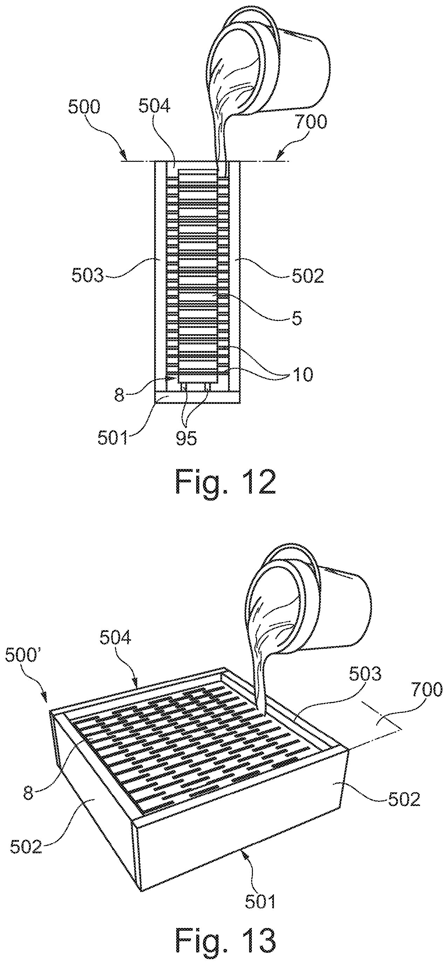

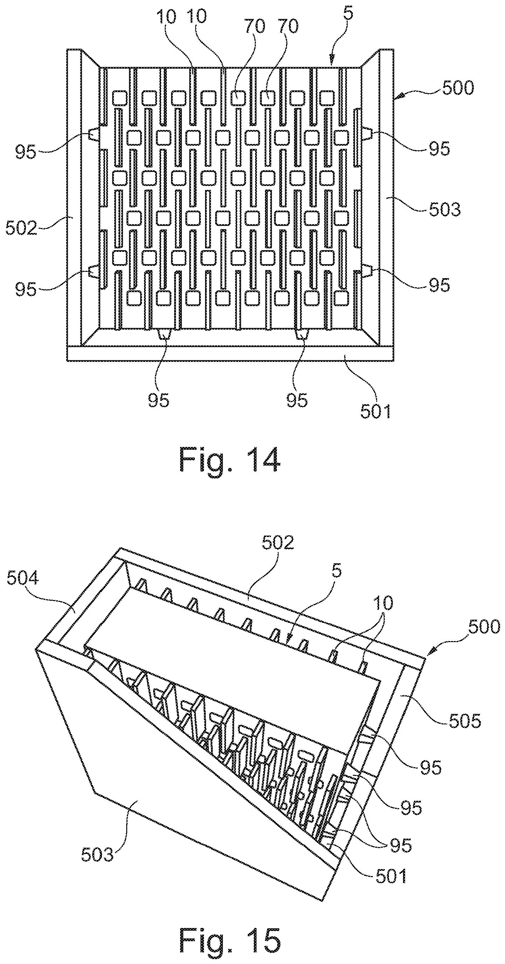

According to a first possible embodiment, schematically shown in Figures 12 and 15, the formwork 500 may be of the "vertical" type, i.e. such as to extends predominantly in the vertical direction. For this purpose, the formwork 500 comprises a horizontal bottom wall 501 from which four side containing walls 502,503,504, 505 extend in pairs according a prismatic configuration. The formwork 500 is open at the top. A first side wall 502 and a mutually opposite second containing side wall 503 have a surface extension corresponding to that provided for the base surfaces 1',1" of the panel 1 to be made. These side walls 502,503 will therefore spaced by a distance corresponding to the thickness 80 provided for the panel 1 to be made. The extension of the bottom wall 501 will be conform to that of one of the peripheral surfaces 110,120,130,140 provided for the panel 1 to be made.

The semi-finished product 8 is inserted in the vertical formwork 500 so that the opposite ends 10',10" of the through elements 10 made of glass are substantially in contact with the first side wall 501 and with the second side wall 502, respectively. In order to define the main portions 23,24 and the side portions 31,32,33,34 made of cementitious mortar of the panel 1, the semi-finished product 8 is located in the vertical formwork 500 so that the side surfaces 61,62,63,64 of the structure 5 are spaced from the corresponding side walls 501,504,505 whereby defining the formwork itself.

As shown in Figures 12 and 15, spacers 95 are inserted in the vertical formwork 500 which keep the semi-finished product 8 spaced from the bottom wall 501 by a value corresponding to the thickness provided for the corresponding side portion 31,32,33,34 of the panel 1 to be made. Similarly, additional spacer elements 95 are provided configured to keep the semi-finished product spaced from the other side walls 503,504 of the formwork 500 by a value corresponding to the provided thickness for the corresponding side portion 31,32,33,34 of the panel 1 to be obtained (see Figure 15).

Using the spacer elements 95 allows to define three of the four side portions 31,32,33,34 of the panel 1. The missing portion is obtained at the open side of the formwork 500 due to the position occupied by the upper edges of the side walls 502,503,504,505 of the vertical formwork 500 with respect to the semi-finished product 8 housed inside. In particular, such portion is defined between a reference plane 700 containing the edges of the panel and the corresponding side surface of the structure 5 of the semi-finished product 8 which faces the opening of the formwork 500.

In an alternative embodiment shown in Figures 13 and 14, the formwork (indicated by reference numeral 500') is of *"horizontal"* type. With respect to the solution in Figure 12, in this case the surface extension of the bottom surface 501 of the formwork 500' corresponds to that provided for the base surface 1',1" of the panel to be made. At the same time the height of the side containing walls 502,503,504,505, evaluated in vertical direction, substantially corresponds to the height 80 provided for the panel to be made.

In this embodiment, the semi-finished product 8 is thus inserted in the horizontal formwork 500' so that the through elements 10 made of glass rest against the bottom wall 501 of the formwork. Also in this case, the use of spacer elements 95 is provided to keep the semi-finished product 8 spaced with respect to the four side walls 502,503,504, 505 of horizontal formwork 500' in order to define the side portions 31,32,33,34 of the panel 1 to be made (Figure 14).

For both embodiments described above, the step of pouring ends when the empty parts inside the formwork 500,500' are completely filled and the cementitious mortar is at the level of the reference plane 700 indicated above. For the purposes of the present invention, a mortar obtained with a cement described in UNI-EN 197.1 can be used as cementitious mortar.

As indicated above, the passages 70 defined by the structure 5 of the semi-finished product 8 allow a distribution of the cementitious mortar in all parts of the formwork 500,500'. In this respect, in the case of a vertical formwork 500 as in Figure 12 and 15, the pouring can be performed only on one side. Due to the conformation of the semi-finished product 8, the cementitious mortar may be distributed evenly also on the second side of the formwork opposite to the pouring side. At the same time, in a horizontal formwork 14, the cementitious mortar, poured over the structure 5 of the semi-finished product 8, may be distributed below the structure 5 precisely by virtue of the particular shape of the semi-finished product 8 itself.

In any case, at the end of the step of pouring, a step of curing is performed during which the cementitious mortar sets adhering to the surfaces of the semi-finished product 8. At the end of curing, the cementitious manufactured item thus obtained is extracted from the formwork 500,500' and finished in such a way as to obtain the desired panel. This step of finishing may comprise, for example, rounding the edges and/or polishing of at least the base surfaces 1',1" of the panel 1 (indicate in a generic way, any other finishing operations).

The panel according to the invention allows to achieve the predetermined tasks and objects. In particular, the panel according to the invention is considerably lighter than the panels currently used in the field, and for this reason can be easily transported and handled. Therefore, the installation is also advantageously simplified.

## Claims

1. A cementitious mortar based composite panel (1) comprising
- a plurality of through elements (10) made of glass for transmitting light from a first base surface (1') to a second base surface (1") of the panel (1), opposite to said first base surface (1'), wherein said through elements (10) extend along a reference direction (101),
- an inner structure (5) about said through elements (10) wherein said inner structure incorporates a central part (12) of said through elements (10);
- a first main portion (23), made of cementitious mortar, between said first base surface (1') of said panel (1) and said inner structure (5), said first main portion (23) incorporating a first end part (13) of said through elements (10) adjacent to said central part (12);
- a second main portion (24), made of cementitious mortar, between said second base surface (1") of said panel (1) and said inner structure (5), said second main portion (24) incorporating a second end part (14) of said through elements (10) opposite to said first end with respect to said central part (12);
- a plurality of through portions (25), made of cementitious mortar, which extend through said inner structure (5), thus connecting said first main portion (23) to said second main portion (24) made of cementitious mortar,
**characterized in that** said inner structure (5) is made of heat-expanded plastic material, and **in that** for at least one of said through elements (10), the extension of said central part (12), evaluated along said reference direction (101), is greater than the extension of each of said end parts (13, 14) of said through elements (10) incorporated into said first and second main portions (23, 24) made of cementitious mortar.

2. A panel (1) according to claim 1, wherein said extension of said first end part (13) and/or of said second end part (14) of at least one of said through elements (10) is between 5% and 25% of the extension of the element itself evaluated along said reference direction (101).

3. A panel (1) according to claim 1 or 2, wherein said heat-expanded plastic material is EPS.

4. A panel (1) according to any one of claims 1 to 3, wherein said structure (5) comprises a body (50) which defines a first main surface (51) and a second main surface (52), said first end part (13) and said second end part (14) emerging from said first main surface (51) and from said second main surface (52), respectively, wherein said first main portion (23), made of cementitious mortar, is between said first base surface (1') and said first main surface (51) of said structure (5), and wherein said second main portion (24), made of cementitious mortar, is between said second base surface (1") and said second main surface (52) of said structure (5).

5. A panel (1) according to claim 4, wherein:
- said panel (1) comprises a first peripheral surface (110) and a mutually opposite second peripheral surface (120), which extend on planes parallel to said reference direction (101) and orthogonal to said base surfaces (1',1");
- said inner structure (5) is delimited by a first side surface (61) and by a mutually opposite second side surface (62), which extend on mutually parallel planes (610,620),
and wherein said panel (1) comprises:
- a first side portion (31) made of cementitious mortar between said first peripheral surface (110) of said panel (1) and said first side surface (61) of said inner structure (5),
- a second side portion (32) made of cementitious mortar between said second peripheral surface (120) of said panel (1) and said second peripheral surface (62) of said inner structure (5).

6. A panel (1) according to claim 5, wherein:
- said panel (1) comprises a third peripheral surface (130) and a mutually opposite fourth peripheral surface (140), which extend on planes parallel to each other and orthogonal to planes on which said first peripheral surface (110) and said second peripheral surface (120) extend;
- said inner structure (5) comprises a third side surface (63) and a mutually opposite fourth side surface (64), which extend on planes substantially parallel to each other and orthogonal to planes on which said first side surface (61) and said second side surface (62) extend, and wherein said panel (1) comprises:
- a third side portion (33) made of cementitious mortar between said third peripheral surface (130) of said panel (1) and said third side surface (63) of said inner structure (5),
- a fourth side portion (34) made of cementitious mortar between said fourth peripheral surface (140) of said panel (1) and said fourth side surface (64) of said inner structure (5).

7. A semi-finished product (8) for making a panel (1) according to any one of claims 1 to 6, comprising an inner structure (5) incorporating a central part (12) of a plurality of through elements (10) made of glass which extend along a reference direction (101), said inner structure (5) comprising a body (50) which defines a first main surface (51) from which a first end part (13) of said through elements (10) emerges, and a second main surface (52) from which a second end part (14) of said through elements (10) emerges opposite to said first end part (13) with respect to said central part (12), and wherein said body (50) of said inner structure (5) defines a plurality of passages (70) which extend from said main surface (51) to said second main surface (52), **characterized in that** said inner structure (5) is made of heat-expanded plastic material in a mold and **in that** for at least one of said through elements (10), the extension of said central part (12) evaluated along said reference direction (101) is greater than the extension of each of said end parts (13, 14) of said through elements (10).

8. A semi-finished product (8) according to claim 7, wherein said body (50) defines:
- a first side surface (61) and a mutually opposite second side surface (62), which extend on planes (610,620) parallel to each other and orthogonal to the planes (510, 520) on which said main surfaces (51, 52) extend;
- a third side surface (63) and a mutually opposite fourth side surface (64), which extend on planes (630, 640) parallel to each other and orthogonal to the planes (510, 520) on which said first side surface (61) and said second side surface (62) extend;
wherein said through elements (10) are arranged along rows offset along a staggered direction (102) which substantially is parallel to the planes on which said first side surface (61) and said second side surface (62), respectively extend.

9. A semi-finished product (8) according to claim 8, wherein said through elements (10) have a substantially rectangular cross section, wherein said cross section is evaluated according to a section plane substantially orthogonal to said reference direction (101).

10. A semi-finished product (8) according to any one of claims 7 to 9, wherein said passages (70) have a cross section the area of which is constant along their complete extension between said first main surface (51) and said second main surface (52), said cross section being evaluated according to a section plane substantially orthogonal to said reference direction (101).

11. A semi-finished product (8) according to any one of claims 7 to 9, wherein said passages (70) have a cross section the area of which decreases from a maximum value at one of said main surfaces (51, 52) to a minimum value at the other of said side surfaces (51, 52).

12. A method for making a semi-finished product (8) according to one of claims 7 to 11, wherein said method comprises the steps of:
a) preparing a mold (100) comprising a first half-mold (101) and a second half-mold (102), at least one of said half-molds (101,102) being provided with feed openings (103) for loading the heat-expanding plastic material;
b) placing said through elements (10) made of glass in predetermined positions so that said central part (12) of said through elements (10) is inside the closed volume configured by said mold (10) following the union of said half-molds (101,102'), while said first end part (13) and said second end part (14) are outside the volume itself;
c) joining said half-molds (101,102) so as to configure said closed volume;
d) loading said heat-expanding plastic material into said mold (100) through said feed openings (103);
e) activating the sintering of said heat-expanding plastic material by subjecting said mold (100) to a thermal heating cycle;
f) extracting said semi-finished product (8) from said mold (100) upon the completion of said sintering,
wherein said half-molds (101, 102) are defined so as to configure, following the union thereof, a plurality of longitudinal nail pins which extend for the whole height of said mold (100), wherein said height corresponds to the extension of said central part (12) of said through elements (10) evaluated along said reference direction (101).

13. A method according to claim 12, wherein each of said half-molds (101, 102) comprises a bottom portion (111, 112) defining a bottom surface (111', 112') and a peripheral portion (121, 122) which extends from said bottom portion (111, 112), and wherein each of said half-molds (101, 102) comprises a plurality of seats (133, 133') defined in the corresponding bottom portion (111, 122), each of which configured to accommodate a corresponding end part (13, 14) of said through elements (10).

14. A method according to claim 13, wherein said step b) provides inserting a first end part (13) of one or more of said through elements (10) into a corresponding housing seat (133) defined in the bottom portion (111) of said first half-mold (101), and wherein said step c) provides joining said half-molds (101) so that a second end part (14) is inserted and remains accommodated in a corresponding seat (133') defined in said bottom portion (112) of said second half-mold (102).

15. A method according to claim 12 or 13, wherein each of said half-molds (101, 102) comprises a plurality of nail pins (115', 115") which extend from the corresponding bottom surface (111', 112'), each nail pin (115', 115") of one of the two half-molds (101,102) comprising an end (116',116") configured to be coupled, following the union of said half-molds (101,102), with a corresponding end (116',116") of a nail pin (115',115") of the other half-mold (101,102).

16. A method for making a panel according to any one of claims 1 to 6, wherein said method provides the steps of:
- preparing a formwork (500, 500') comprising a bottom wall (501) and four side walls (502, 503, 504, 505) which extend from said bottom wall (501) so as to define an opening opposite to said bottom wall (501);
- preparing a semi-finished product (8) according to any one of claims 7 to 11;
- inserting said semi-finished product (8) into said formwork (500, 500') through said opening;
- pouring cementitious mortar into said formwork (500, 500');
- extracting said panel obtained following the setting of said cementitious mortar from said formwork (500, 500').

17. A method according to claim 16, wherein said formwork (500) comprises a first pair of mutually facing side walls (502, 503) which are spaced apart by a value corresponding to the thickness (80) of said panel (1') to be made, wherein said side walls (502,503) of said pair have an area corresponding to the area of said base surfaces (1',1") of said panel (1) to be made.

18. A method according to claim 17, wherein before the insertion of said semi-finished product (8) into said formwork (500), said method provides preparing spacer elements inside said formwork to keep said semi-finished product (8) spaced apart from said bottom wall and from one each side wall of a second pair of mutually facing side walls (504,505).

19. A method according to claim 16, wherein said bottom wall (501) of said formwork (500') has an area corresponding to the one of said base surfaces (1', 1") of said panel (1) to be made.

20. A method according to claim 19, wherein said method, before the insertion of said semi-finished product (8) into said formwork (500') provides arranging spacer elements inside said formwork (500') to keep said semi-finished product (8) spaced apart from said side walls (502, 503, 504, 505).

## Patentansprüche

1. Zementmörtelbasierte Verbundplatte (1), aufweisend:
- eine Vielzahl von Durchlasselementen (10) aus Glas, um Licht von einer ersten Grundfläche (1') zu einer zweiten Grundfläche (1") der Platte (1), die der ersten Grundfläche (1') gegenüber liegt, weiterzuleiten, wobei sich die Durchlasselemente (10) entlang einer Bezugsrichtung (101) erstrecken;
- eine Innenstruktur (5), die die Durchlasselemente (10) umgibt, wobei die Innenstruktur einen zentralen Abschnitt (12) der Durchlasselemente (10) aufnimmt;
- einen ersten Hauptabschnitt (23) aus Zementmörtel zwischen der ersten Grundfläche (1') der Platte (1) und der Innenstruktur (5), wobei der erste Hauptabschnitt (23) einen ersten Endbereich (13) der Durchlasselemente (10), angrenzend an den zentralen Abschnitt (12), beinhaltet;
- einen zweiten Hauptabschnitt (24) aus Zementmörtel zwischen der zweiten Grundfläche (1") der Platte (1) und der Innenstruktur (5), wobei der zweite Hauptabschnitt (24) einen zweiten Endbereich (14) der Durchlasselemente (10) aufnimmt, der bezüglich des zentralen Abschnitts (12) dem ersten Ende gegenüberliegt;
- eine Vielzahl von Durchgangsabschnitten (25) aus Zementmörtel, die sich durch die Innenstruktur (5) erstrecken und somit den ersten Hauptabschnitt (23) aus Zementmörtel mit dem zweiten Hauptabschnitt (24) aus Zementmörtel verbinden,
**dadurch gekennzeichnet, dass** die Innenstruktur (5) aus wärmeexpandiertem Kunststoff hergestellt wurde und dadurch, dass für zumindest eines der Durchlasselemente (10) die entlang der Bezugsrichtung (101) ermittelte Ausdehnung des zentralen Abschnitts (12) größer ist als die Ausdehnung jedes Endbereichs (13, 14) der Durchlasselemente (10), die in den ersten und zweiten Hauptabschnitten (23, 24) aus Zementmörtel aufgenommen sind.

2. Platte (1) gemäß Anspruch 1, wobei die Ausdehnung des ersten Endbereichs (13) und / oder des zweiten Endbereichs (14) von zumindest einem der Durchlasselemente (10) zwischen 5% und 25% der entlang der Bezugsrichtung (101) ermittelten Ausdehnung des Elements selbst beträgt.

3. Platte (1) gemäß Anspruch 1 oder 2, wobei der wärmeexpandierte Kunststoff EPS ist.

4. Platte (1) gemäß einem der Ansprüche 1 bis 3, wobei die Struktur (5) einen Korpus (50) aufweist, der eine erste Hauptfläche (51) und eine zweite Hauptfläche (52) definiert, wobei der erste Endbereich (13) und der zweite Endbereich (14) aus der ersten Hauptfläche (51) bzw. der zweiten Hauptfläche (52) hervorstehen, wobei der erste Hauptabschnitt (23) aus Zementmörtel sich zwischen der ersten Grundfläche (1') und der ersten Hauptfläche (51) der Struktur (5) befindet, und der zweite Hauptabschnitt (24) aus Zementmörtel sich zwischen der zweiten Grundfläche (1") und der zweiten Hauptfläche (52) der Struktur (5) befindet.

5. Platte (1) gemäß Anspruch 4, wobei:
- die Platte (1) eine erste Außenfläche (110) und eine gegenüberliegende zweite Außenfläche (120) aufweist, die sich auf Ebenen parallel zur Bezugsrichtung (101) und senkrecht zu den Grundflächen (1', 1") erstrecken;
- die Innenstruktur (5) durch eine erste Seitenfläche (61) und eine gegenüberliegende zweite Seitenfläche (62) begrenzt ist, die sich auf zueinander parallelen Ebenen (610, 620) erstrecken,
wobei die Platte (1) aufweist:
- einen ersten Seitenabschnitt (31) aus Zementmörtel zwischen der ersten Außenfläche (110) der Platte (1) und der ersten Seitenfläche (61) der Innenstruktur (5),
- einen zweiten Seitenabschnitt (32) aus Zementmörtel zwischen der zweiten Außenfläche (120) der Platte (1) und der zweiten Seitenfläche (62) der Innenstruktur (5).

6. Platte (1) gemäß Anspruch 5, wobei:
- die Platte (1) eine dritte Außenfläche (130) und eine gegenüberliegende vierte Außenfläche (140) aufweist, die sich auf Ebenen parallel zueinander erstrecken und senkrecht zu den Ebenen sind, auf denen sich die erste Außenfläche (110) und die zweite Außenfläche (120) erstrecken;
- die Innenstruktur (5) eine dritte Seitenfläche (63) und eine gegenüberliegende vierte Seitenfläche (64) aufweist, die sich auf im Wesentlichen zueinander parallelen Ebenen und senkrecht zu Ebenen erstrecken, auf denen sich die erste Seitenfläche (61) und die zweite Seitenfläche (62) erstrecken,
wobei die Platte (1) aufweist:
- einen dritten Seitenabschnitt (33) aus Zementmörtel zwischen der dritten Außenfläche (130) der Platte (1) und der vierten Seitenfläche (63) der Innenstruktur (5),
- einen vierten Seitenabschnitt (34) aus Zementmörtel zwischen der vierten Außenfläche (140) der Platte (1) und der vierten Seitenfläche (64) der Innenstruktur (5).

7. Zwischenprodukt (8) zur Herstellung einer Platte (1) gemäß einem der Ansprüche 1 bis 6, aufweisend eine Innenstruktur (5), die einen zentralen Abschnitt (12) einer Vielzahl von Durchlasselementen (10) aus Glas aufnimmt, die sich entlang einer Bezugsrichtung (101) erstrecken, wobei die Innenstruktur (5) einen Korpus (50) aufweist, der eine erste Hauptfläche (51) definiert, von der ein erster Endbereich (13) der Durchlasselemente (10) hervorsteht, sowie eine zweite Hauptfläche (52) von der ein zweiter Endbereich (14) der Durchlasselemente (10), der bezüglich dem zentralen Abschnitt (12) dem ersten Endbereich (13) gegenüberliegt, hervorsteht, und wobei der Korpus (50) der Innenstruktur (5) eine Vielzahl von Durchlässen (70) definiert, die sich von der Hauptfläche (51) zur zweiten Hauptfläche (52) erstrecken,
**dadurch gekennzeichnet, dass** die Innenstruktur (5) aus wärmeexpandiertem Kunststoff in einer Gussform hergestellt wurde und dadurch, dass für zumindest eines der Durchlasselemente (10) die entlang der Bezugsrichtung (101) ermittelte Ausdehnung des zentralen Abschnitts (12) größer ist als die Ausdehnung jedes Endbereichs (13, 14) der Durchlasselemente (10).

8. Zwischenprodukt (8) gemäß Anspruch 7, wobei der Korpus (50) definiert:
- eine erste Seitenfläche (61) und eine gegenüberliegende zweite Seitenfläche (62), die sich auf zueinander parallelen Ebenen (610, 620) und senkrecht zu den Ebenen (510, 520) erstrecken, auf denen sich die Hauptflächen (51, 52) erstrecken;
- eine dritte Seitenfläche (63) und eine gegenüberliegende vierte Seitenfläche (64), die sich auf zueinander parallelen Ebenen (630, 640) und senkrecht zu den Ebenen (510, 520) erstrecken, auf denen sich die erste Seitenfläche (61) und die zweite Seitenfläche (62) erstrecken;
wobei die Durchlasselemente (10) entlang versetzter Reihen längs einer versetzten Richtung (102) angeordnet sind, die im Wesentlichen parallel zu den Ebenen ist, auf denen sich die erste Seitenfläche (61) bzw. die zweite Seitenfläche (62) erstrecken.

9. Zwischenprodukt (8) gemäß Anspruch 8, wobei die Durchlasselemente (10) einen im Wesentlichen rechteckigen Querschnitt aufweisen, wobei der Querschnitt bezüglich einer Schnittebene ermittelt wird, die im Wesentlichen senkrecht zur Bezugsrichtung (101) ist.

10. Zwischenprodukt (8) gemäß einem der Ansprüche 7 bis 9, wobei die Durchlässe (70) einen Querschnitt aufweisen, dessen Fläche entlang ihrer genannten Ausdehnung zwischen der ersten Hauptfläche (51) und der zweiten Hauptfläche (52) konstant ist, wobei der Querschnitt bezüglich einer Schnittebene ermittelt wird, die im Wesentlichen senkrecht zur Bezugsrichtung (101) ist.

11. Zwischenprodukt (8) gemäß einem der Ansprüche 7 bis 9, wobei die Durchlässe (70) einen Querschnitt aufweisen, dessen Fläche von einem Maximalwert an einer der Hauptflächen (51, 52) zu einem Minimalwert an der anderen der Hauptflächen (51, 52) abnimmt.

12. Verfahren zur Herstellung eines Zwischenprodukts (8) gemäß einem der Ansprüche 7 bis 11, wobei das Verfahren folgende Schritte aufweist:
a) Erstellen einer Gussform (100), die eine erste Formhälfte (101) und eine zweite Formhälfte (102) aufweist, wobei zumindest eine der beiden Formhälften (101, 102) mit Zuführöffnungen (103) für die Zufuhr des wärmeexpandierenden Materials versehen ist;
b) Anordnen der Durchlasselemente (10) aus Glas in vorbestimmte Positionen, so dass sich der zentrale Abschnitt (12) der Durchlasselemente (10) innerhalb des geschlossenen Volumens der Gussform (10) befindet, das durch die Verbindung der beiden Formhälften (101, 102) geformt wird, während sich der erste Endbereich (13) und der zweite Endbereich (14) außerhalb des Volumens selbst befinden;
c) Zusammenbringen der beiden Formhälften (101, 102), um das geschlossene Volumen zu bilden;
d) Zuführen des wärmeexpandierenden Materials in die Gussform (100) durch die Zuführöffnungen (103);
e) Aktivieren des Sinterprozesses des wärmeexpandierenden Materials, indem die Gussform (100) einem thermischen Heizzyklus unterworfen wird;
f) Entnahme des Zwischenprodukts (8) aus der Gussform (100) nach Beendigung des Sinterprozesses,
wobei die Formhälften (101, 102) so definiert sind, dass sie nach ihrem Vereinigen eine Vielzahl von Nagelstiften bilden, die sich über die gesamte Höhe der Gussform (100) erstrecken, wobei diese Höhe mit der Ausdehnung des zentralen Abschnitts (12) der Durchlasselemente (10) entlang der Bezugsrichtung (101) übereinstimmt.

13. Verfahren gemäß Anspruch 12, wobei jede der Formhälften (101, 102) ein Bodenabschnitt (111, 112) der eine Bodenfläche (111', 112') definiert und einen Außenabschnitt (121, 122) aufweist, der sich von dem Bodenabschnitt (111, 112) erstreckt, und wobei jede der Formhälften (101, 102) eine Vielzahl von Aufnahmen (133, 133') aufweist, die in dem zugehörigen Bodenabschnitt (111, 122) definiert sind, und jede derart ausgestaltet ist, dass sie einen zugehörigen Endbereich (13, 14) der Durchlasselemente (10) aufnehmen kann.

14. Verfahren gemäß Anspruch 13, wobei Schritt b) ein Einsetzen eines ersten Endbereichs (13) eines oder mehrerer Durchlasselemente (10) in eine zugehörige Gehäuseaufnahme (133) vorsieht, die in dem Bodenabschnitt (111) der ersten Formhälfte (101) definiert ist, und wobei Schritt c) ein Zusammenbringen der Formhälften (101) derart vorsieht, dass ein zweiter Endbereich (14) in eine zugehörige Aufnahme (133'), die in dem Bodenabschnitt (112) der zweiten Formhälfte (102) definiert ist, eingesetzt und aufgenommen verbleibt.

15. Verfahren gemäß einem der Ansprüche 12 oder 13, wobei jede der Formhälften (101, 102) eine Vielzahl von Nagelstiften (115', 115") aufweist, die sich von der zugehörigen Bodenfläche (111', 112') erstrecken, wobei jeder Nadelstift (115', 115") jeder Formhälfte (101, 102) ein Ende (116', 116") aufweist, das derart ausgestaltet ist, dass es nach einem Zusammenbringen der beiden Formhälften (101, 102) mit einem zugehörigen Ende (116', 116") eines Nadelstifts (115', 115") der anderen Formhälfte (101, 102) verbunden werden kann.

16. Verfahren zur Herstellung einer Platte gemäß einem der Ansprüche 1 bis 6, wobei das Verfahren folgende Schritte aufweist:
- Erstellen einer Schalung (500, 500'), die eine Bodenwand (501) und vier Seitenwände (502, 503, 504, 505), die sich von der Bodenwand (501) erstrecken, aufweist, so dass eine Öffnung gegenüber der Bodenwand (501) definiert wird;
- Erstellen eines Zwischenprodukts (8) gemäß einem der Ansprüche 7 bis 11;
- Einsetzen des Zwischenprodukts (8) in die Schalung (500, 500') durch die Öffnung;
- Einfüllen von Zementmörtel in die Schalung (500, 500');
- Entnehmen der Platte, die man nach Abbinden des Zementmörtels erhält aus der Schalung (500, 500').

17. Verfahren gemäß Anspruch 16, wobei die Schalung (500) ein erstes Paar zueinander weisender Seitenwände (502, 503) aufweist, die zueinander mit einem Wert beabstandet sind, der mit der Stärke (80) der herzustellenden Platte (1') übereinstimmt, und wobei die Seitenwände (502, 503) des Paares eine Fläche aufweisen, die mit der Fläche der Grundflächen (1', 1") der herzustellenden Platte (1) übereinstimmt.

18. Verfahren gemäß Anspruch 17, wobei das Verfahren vor dem Einsetzen des Zwischenprodukts (8) in die Schalung (500), das Erstellen von Abstandselementen in der Schalung vorsieht, um das Zwischenprodukt (8) von der Bodenwand und von jeder Seitenwand eines zweiten Paares zueinander weisender Seitenwände (504, 505) zu beabstanden.

19. Verfahren gemäß Anspruch 16, wobei die Bodenwand (501) der Schalung (500') eine Fläche aufweist, die mit der Fläche der Grundflächen (1', 1") der herzustellenden Platte (1) übereinstimmt.

20. Verfahren gemäß Anspruch 19, wobei das Verfahren vor dem Einsetzen des Zwischenprodukts (8) in die Schalung (500') das Anordnen von Abstandselementen in der Schalung (500') vorsieht, um das Zwischenprodukt (8) von den Seitenwänden (502, 503, 504, 505) beabstandet zu halten.

## Revendications

1. Panneau (1) composite à base de mortier de ciment comprenant
- une pluralité d'éléments traversants (10) réalisés en verre pour transmettre de la lumière d'une première surface de base (1') à une deuxième surface de base (1") du panneau (1), opposée à ladite première surface de base (1'), dans lequel lesdits éléments traversants (10) s'étendent le long d'une direction de référence (101),
- une structure interne (5) autour desdits éléments traversants (10) dans lequel ladite structure interne incorpore une partie centrale (12) desdits éléments traversants (10) ;
- une première portion principale (23), réalisée en mortier de ciment, entre ladite première surface de base (1') dudit panneau (1) et ladite structure interne (5), ladite première portion principale (23) incorporant une première partie d'extrémité (13) desdits éléments traversants (10) adjacente à ladite partie centrale (12) ;
- une deuxième portion principale (24), réalisée en mortier de ciment, entre ladite deuxième surface de base (1") dudit panneau (1) et ladite structure interne (5), ladite deuxième portion principale (24) incorporant une deuxième partie d'extrémité (14) desdits éléments traversants (10) opposée à ladite première extrémité par rapport à ladite partie centrale (12) ;
- une pluralité de portions traversantes (25), réalisées en mortier de ciment, qui s'étendent à travers ladite structure interne (5), reliant ainsi ladite première portion principale (23) à ladite deuxième portion principale (24) réalisées en mortier de ciment,
**caractérisé en ce que** ladite structure interne (5) est réalisée en une matière plastique thermoexpansée, et **en ce que** pour au moins l'un desdits éléments traversants (10), l'extension de ladite partie centrale (12), évaluée le long de ladite direction de référence (101), est supérieure à l'extension de chacune desdites parties d'extrémité (13, 14) desdits éléments traversants (10) incorporés dans lesdites première et deuxième portions principales (23, 24) réalisées en mortier de ciment.

2. Panneau (1) selon la revendication 1, dans lequel ladite extension de ladite première partie d'extrémité (13) et/ou de ladite deuxième partie d'extrémité (14) d'au moins un desdits éléments traversants (10) est entre 5 % et 25 % de l'extension de l'élément lui-même évaluée le long de ladite direction de référence (101).

3. Panneau (1) selon la revendication 1 ou 2, dans lequel ladite matière plastique thermoexpansée est du EPS.

4. Panneau (1) selon l'une quelconque des revendications 1 à 3, dans lequel ladite structure (5) comprend un corps (50) qui définit une première surface principale (51) et une deuxième surface principale (52), ladite première partie d'extrémité (13) et ladite deuxième partie d'extrémité (14) émergeant de ladite première surface principale (51) et de ladite deuxième surface principale (52), respectivement, dans lequel ladite première portion principale (23), réalisée en mortier de ciment, est entre ladite première surface de base (1') et ladite première surface principale (51) de ladite structure (5), et dans lequel ladite deuxième portion principale (24), réalisée en mortier de ciment, est entre ladite deuxième surface de base (1") et ladite deuxième surface principale (52) de ladite structure (5).

5. Panneau (1) selon la revendication 4, dans lequel :
- ledit panneau (1) comprend une première surface périphérique (110) et une deuxième surface périphérique (120) mutuellement opposée, qui s'étendent sur des plans parallèles à ladite direction de référence (101) et orthogonaux auxdites surfaces de base (1', 1") ;
- ladite structure interne (5) est délimitée par une première surface latérale (61) et par une deuxième surface latérale (62) mutuellement opposée, qui s'étendent sur des plans mutuellement parallèles (610, 620),
et dans lequel ledit panneau (1) comprend :
- une première portion latérale (31) réalisée en mortier de ciment entre ladite première surface périphérique (110) dudit panneau (1) et ladite première surface latérale (61) de ladite structure interne (5),
- une deuxième portion latérale (32) réalisée en mortier de ciment entre ladite deuxième surface périphérique (120) dudit panneau (1) et ladite deuxième surface périphérique (62) de ladite structure interne (5).

6. Panneau (1) selon la revendication 5, dans lequel :
- ledit panneau (1) comprend une troisième surface périphérique (130) et une quatrième surface périphérique (140) mutuellement opposée, qui s'étendent sur des plans parallèles entre eux et orthogonaux à des plans sur lesquels s'étendent ladite première surface périphérique (110) et ladite deuxième surface périphérique (120) ;
- ladite structure interne (5) comprend une troisième surface latérale (63) et une quatrième surface latérale (64) mutuellement opposée, qui s'étendent sur des plans sensiblement parallèles entre eux et orthogonaux à des plans sur lesquels s'étendent ladite première surface latérale (61) et ladite deuxième surface latérale (62), et dans lequel ledit panneau (1) comprend :
- une troisième portion latérale (33) réalisée en mortier de ciment entre ladite troisième surface périphérique (130) dudit panneau (1) et ladite troisième surface latérale (63) de ladite structure interne (5),
- une quatrième portion latérale (34) réalisée en mortier de ciment entre ladite quatrième surface périphérique (140) dudit panneau (1) et ladite quatrième surface latérale (64) de ladite structure interne (5).

7. Produit semi-fini (8) pour la fabrication d'un panneau (1) selon l'une quelconque des revendications 1 à 6, comprenant une structure interne (5) incorporant une partie centrale (12) d'une pluralité d'éléments traversants (10) réalisés en verre qui s'étendent le long d'une direction de référence (101), ladite structure interne (5) comprenant un corps (50) qui définit une première surface principale (51) à partir de laquelle émerge une première partie d'extrémité (13) desdits éléments traversants (10), et une deuxième surface principale (52), à partir de laquelle émerge une deuxième partie d'extrémité (14) desdits éléments traversants (10) opposée à ladite première partie d'extrémité (13) par rapport à ladite partie centrale (12), et dans lequel ledit corps (50) de ladite structure interne (5) définit une pluralité de passages (70) qui s'étendent à partir de ladite première surface principale (51) jusqu'à ladite deuxième surface principale (52), **caractérisé en ce que** ladite structure interne (5) est réalisée en matière plastique thermoexpansée dans un moule et **en ce que** pour au moins l'un desdits éléments traversants (10), l'extension de ladite partie centrale (12) évaluée le long de ladite direction de référence (101) est supérieure à l'extension de chacune desdites parties d'extrémité (13, 14) desdits éléments traversants (10).

8. Produit semi-fini (8) selon la revendication 7, dans lequel ledit corps (50) définit :
- une première surface latérale (61) et une deuxième surface latérale (62) mutuellement opposée, qui s'étendent sur des plans (610, 620) parallèles entre eux et orthogonaux aux plans (510, 520) sur lesquels s'étendent lesdites surfaces principales (51, 52) ;
- une troisième surface latérale (63) et une quatrième surface latérale (64) mutuellement opposée, qui s'étendent sur des plans (630, 640) parallèles entre eux et orthogonaux aux plans (510, 520) sur lesquels s'étendent ladite première surface latérale (61) et ladite deuxième surface latérale (62) ;
dans lequel lesdits éléments traversants (10) sont disposés le long de rangées décalées le long d'une direction en quinconce (102) qui est sensiblement parallèle aux plans sur lesquels s'étendent respectivement ladite première surface latérale (61) et ladite deuxième surface latérale (62).

9. Produit semi-fini (8) selon la revendication 8, dans lequel lesdits éléments traversants (10) ont une section transversale sensiblement rectangulaire, dans lequel ladite section transversale est évaluée selon un plan de section sensiblement orthogonal à ladite direction de référence (101).

10. Produit semi-fini (8) selon l'une quelconque des revendications 7 à 9, dans lequel lesdits passages (70) ont une section transversale dont l'aire est constante le long de leur complète extension entre ladite première surface principale (51) et ladite deuxième surface principale (52), ladite section transversale étant évaluée selon un plan de section sensiblement orthogonal à ladite direction de référence (101).

11. Produit semi-fini (8) selon l'une quelconque des revendications 7 à 9, dans lequel lesdits passages (70) ont une section transversale dont l'aire diminue à partir d'une valeur maximale en correspondance de l'une desdites surfaces principales (51, 52) jusqu'à une valeur minimale en correspondance de l'autre desdites surfaces latérales (51, 52).

12. Procédé de fabrication d'un produit semi-fini (8) selon l'une des revendications 7 à 11, dans lequel ledit procédé comprend les étapes de :
a) préparer un moule (100) comprenant un premier demi-moule (101) et un deuxième demi-moule (102), au moins un desdits demi-moules (101, 102) étant fourni avec des ouvertures d'alimentation (103) pour charger la matière plastique thermoexpansible ;
b) placer lesdits éléments traversants (10) réalisés en verre dans des positions prédéterminées de sorte que ladite partie centrale (12) desdits éléments traversants (10) soit à l'intérieur du volume fermé configuré par ledit moule (10) suivant l'union desdits demi-moules (101, 102), tandis que ladite première partie d'extrémité (13) et ladite deuxième partie d'extrémité (14) sont à l'extérieur du volume lui-même ;
c) joindre lesdits demi-moules (101, 102) de manière à configurer ledit volume fermé ;
d) charger ladite matière plastique thermoexpansible dans ledit moule (100) à travers lesdites ouvertures d'alimentation (103) ;
e) activer le frittage de ladite matière plastique thermoexpansible en soumettant ledit moule (100) à un cycle de réchauffement thermique ;
f) extraire ledit produit semi-fini (8) dudit moule (100) après la finalisation dudit frittage,
dans lequel lesdits demi-moules (101, 102) sont définis de manière à configurer, suivant leur union, une pluralité de clous longitudinaux qui s'étendent sur toute la hauteur dudit moule (100), dans lequel ladite hauteur correspond à l'extension de ladite partie centrale (12) desdits éléments traversants (10) évaluée le long de ladite direction de référence (101).

13. Procédé selon la revendication 12, dans lequel chacun desdits demi-moules (101, 102) comprend une portion inférieure (111, 112) définissant une surface inférieure (111', 112') et une portion périphérique (121, 122) qui s'étend à partir de ladite portion inférieure (111, 112), et dans lequel chacun desdits demi-moules (101, 102) comprend une pluralité de sièges (133, 133') définis dans la portion inférieure (111, 122) correspondante, chacun desquels configuré pour loger une partie d'extrémité (13, 14) correspondante desdits éléments traversants (10).

14. Procédé selon la revendication 13, dans lequel ladite étape b) fournit insérer une première partie d'extrémité (13) d'un ou plusieurs desdits éléments traversants (10) dans un siège de logement (133) correspondant défini dans la portion inférieure (111) dudit premier demi-moule (101), et dans lequel ladite étape c) fournit joindre lesdits demi-moules (101) de sorte qu'une deuxième partie d'extrémité (14) est insérée et reste logée dans un siège (133') correspondant défini dans ladite portion inférieure (112) dudit deuxième demi-moule (102).

15. Procédé selon la revendication 12 ou 13, dans lequel chacun desdits demi-moules (101, 102) comprend une pluralité de clous (115', 115") qui s'étendent à partir de la surface inférieure (111', 112') correspondante, chaque clou (115', 115") de l'un des deux demi-moules (101, 102) comprenant une extrémité (116', 116") configurée pour être couplée, suivant l'union desdits demi-moules (101, 102), avec une extrémité (116', 116") correspondante d'un clou (115', 115") de l'autre demi-moule (101, 102).

16. Procédé de fabrication d'un panneau selon l'une quelconque des revendications 1 à 6, dans lequel ledit procédé fournit les étapes de :
- préparer un coffrage (500, 500') comprenant une paroi inférieure (501), et quatre parois latérales (502, 503, 504, 505) qui s'étendent à partir de ladite paroi inférieure (501) de manière à définir une ouverture à l'opposé de ladite paroi inférieure (501) ;
- préparer un produit semi-fini (8) selon l'une quelconque des revendications 7 à 11 ;
- insérer ledit produit semi-fini (8) dans ledit coffrage (500, 500') à travers ladite ouverture ;
- verser du mortier de ciment dans ledit coffrage (500, 500') ;
- extraire ledit panneau obtenu, suite à la prise dudit mortier de ciment, dudit coffrage (500, 500').

17. Procédé selon la revendication 16, dans lequel ledit coffrage (500) comprend une première paire de parois latérales (502, 503) se faisant mutuellement face qui sont espacées d'une valeur correspondant à l'épaisseur (80) dudit panneau (1') à fabriquer, dans lequel lesdites parois latérales (502, 503) de ladite paire ont une aire correspondant à l'aire desdites surfaces de base (1', 1") dudit panneau (1) à fabriquer.

18. Procédé selon la revendication 17, dans lequel avant l'insertion dudit produit semi-fini (8) dans ledit coffrage (500), ledit procédé fournit préparer des éléments d'espacement à l'intérieur dudit coffrage pour maintenir ledit produit semi-fini (8) espacé de ladite paroi inférieure et de chacune des parois latérales d'une deuxième paire de parois latérales (504, 505) se faisant mutuellement face.

19. Procédé selon la revendication 16, dans lequel ladite paroi inférieure (501) dudit coffrage (500') a une aire correspondant à celle desdites surfaces de base (1', 1") dudit panneau (1) à fabriquer.

20. Procédé selon la revendication 19, dans lequel ledit procédé, avant l'insertion dudit produit semi-fini (8) dans ledit coffrage (500') fournit disposer des éléments d'espacement à l'intérieur dudit coffrage (500') pour maintenir ledit produit semi-fini (8) espacé desdites parois latérales (502, 503, 504, 505).
